# EUROPÄISCHE PATENTSCHRIFT

(11) **EP 2 071 045 B1**
(45) Veröffentlichungstag und Bekanntmachung des Hinweises auf die Patenterteilung: **27.06.2012**
(21) Anmeldenummer: 08105568.3
(22) Anmeldetag: 14.10.2008
(51) Int. Cl.: C21D 9/00, C21D 1/10, C21D 1/42, B21D 53/88, C21D 1/74, C22C 38/32, C21D 7/02

(54) **Verfahren und Vorrichtung zur Herstellung von gehärteten Bauteilen aus Stahlblech, die ein geschlossenes Profil oder ein offenes Profil mit Hinterschnitt aufweisen**
Method and device for producing hardened components from sheet metal with a closed profile or an open profile with an undercut
Procédé et dispositif de fabrication de composants durcis en tôle d'acier, comprenant un profil fermé ou ouvert doté d'une coupe arrière

(30) Priorität: 11.12.2007 DE 102007059974
(43) Veröffentlichungstag der Anmeldung: 17.06.2009
(73) Patentinhaber: GMF Umformtechnik GmbH, 33647 Bielefeld (DE)
(72) Erfinder: Horstkott, Dirk, 49205 Hasbergen (DE); Ludewig, Stefan, 33803 Steinhagen (DE)
(74) Vertreter: Cohausz & Florack

(56) Entgegenhaltungen:
- DE-B1- 2 418 495
- JP-A- 53 006 212
- US-A1- 2003 201 584

## Beschreibung

Die Erfindung betrifft ein Verfahren und eine Vorrichtung zur Herstellung von gehärteten Bauteilen aus Stahlblech, die ein geschlossenes Profil oder ein offenes Profil mit Hinterschnitt aufweisen, insbesondere von entsprechend geformten Aufprallträgern für Kraftfahrzeuge.

Sicherheits- oder Strukturbauteile sind im Kraftfahrzeugbau in Form von Stoßfängern, Seitenaufprallträgern und Säulenverstärkungen bekannt. An derartige Bauteile werden unterschiedlichste Anforderungen gestellt. Sie müssen bei einem Unfall einerseits die kinetische Energie des Aufpralls aufnehmen, sollen jedoch andererseits eine so hohe Festigkeit besitzen, dass sie bei einem Aufprall eine optimale Formstabilität für einen weitestmöglichen Schutz der Insassen des Fahrzeugs gewährleisten. Des Weiteren besteht an solche Bauteile die zusätzliche Anforderung, dass auch sie möglichst leicht sind, um den Kraftstoffverbrauch der Fahrzeuge zu senken. Ferner ist der für die Anordnung solcher Bauteile zur Verfügung stehende Konstruktionsbauraum in der Regel begrenzt, was die Erfüllung der an die Bauteile gestellten Anforderungen erschwert.

Es ist bekannt, die an Bauteile der voranstehend erläuterten Art gestellten Anforderungen dadurch zu erfüllen, dass Profile aus Stahlblech zur Verfügung gestellt werden, die nach ihrer Formgebung zumindest partiell induktiv gehärtet werden. So sind beispielsweise aus der DE 10 2005 012 522 B4 ein Verfahren und eine Vorrichtung zum abschnittsweisen Durchhärten von aus Stahlblech fertig geformten Bauteilen bekannt. Dabei wird der durchzuhärtende Bauteilabschnitt in dem von einem Ringinduktor erfassten Teilbereich induktiv auf Härtetemperatur erwärmt und unmittelbar nach dieser Erwärmung so abgeschreckt, dass in dem jeweils fertig gehärteten Teilbereich über die Dicke des Bauteils Härtegefüge erhalten wird. Während der Erwärmung wird der vom Induktor jeweils erfasste Teilbereich des durchzuhärtenden Bauteilabschnitts laufend mit einem Schutzgas gespült, um einen Zutritt von Sauerstoff zu der erhitzten Stelle und damit eine Verzunderung des Bauteils zu verhindern. Die Schutzgaseinrichtung umfasst ein Gehäuse, welches das Bauteil nach Art einer Hülle umgibt. In dem Gehäuse sind mehrere Düsen zum Ausbringen des Schutzgases angeordnet. Diese bekannte Schutzgaseinrichtung ist geeignet, um beim induktiven Härten eines aus Stahlblech fertig geformten Seitenaufprallträgers, in den parallel zueinander verlaufende Sicken eingeformt sind, eine Verzunderung der erhitzten Stelle zu verhindern.

Eine ähnliche Vorrichtung zum induktiven Härten von Sicherheitsfunktionen wahrnehmenden Strukturteilen ist in der EP 1 052 295 A2 beschrieben. Die durchzuhärtenden Strukturteile sollen dabei als offene oder geschlossene Profile ausgeführt sein können.

Inzwischen werden für Nutzfahrzeuge besondere Unterfahrschutzsysteme gefordert, die das Unterfahren eines Personenkraftwagens bei einem Frontalzusammenstoß minimieren sollen.

Der vorliegenden Erfindung liegt die Aufgabe zugrunde, ein Verfahren sowie eine Vorrichtung zur Herstellung hochfester Sicherheits- oder Strukturbauteile aus Stahlblech insbesondere für Unterfahrschutzsysteme anzugeben, die ein geschlossenes Profil oder ein offenes Profil mit Hinterschnitt aufweisen.

In Bezug auf das Verfahren ist diese Aufgabe durch ein Verfahren mit den Merkmalen des Anspruchs 1 gelöst worden.

Mit dem erfindungsgemäßen Verfahren lassen sich hochfeste Bauteile aus Stahlblech herstellen, die ein geschlossenes Profil oder ein offenes Profil mit Hinterschnitt aufweisen. Dabei wird - wie an sich bekannt - zumindest ein Teilbereich des jeweiligen Bauteils unter Schutzgas auf Härtetemperatur erwärmt, wobei das Bauteil und ein ein elektromagnetisches Feld induzierender Induktor relativ zueinander bewegt werden. Unmittelbar nach dieser Erwärmung wird der auf Härtetemperatur erwärmte Teilbereich des Bauteils abgeschreckt. Das erfindungsgemäße Verfahren ist dadurch gekennzeichnet, dass die Innenseite des Bauteils mittels einer in den vom Profil definierten Kanal eingeführten

Schutzgaseinrichtung mit Schutzgas beaufschlagt wird, wobei das Bauteil und die in den vom Profil definierten Kanal eingeführte Schutzgaseinrichtung relativ zueinander bewegt werden.

Die Lösung der oben genannten Aufgabe besteht in Bezug auf die Vorrichtung zur Herstellung von gehärteten Bauteilen aus Stahlblech, die ein geschlossenes Profil oder ein offenes Profil mit Hinterschnitt aufweisen, darin, dass eine solche Vorrichtung mit einem Induktor zum Erwärmen eines Teilbereichs des jeweiligen Bauteils auf Härtetemperatur, mit einer Kühleinrichtung zum Abschrecken des auf Härtetemperatur erwärmten Teilbereichs, mit einer der Außenseite des Bauteils zugeordneten Schutzgaseinrichtung zum Ausbringen eines mindestens den vom Induktor erfassten Teilbereich beaufschlagenden Schutzgasstroms, mit einer Fördereinrichtung, die während des Härtens das Bauteil und den Induktor relativ zueinander bewegt, und mit einer zweiten Schutzgaseinrichtung ausgestattet ist, die zur Beaufschlagung der Innenseite des vom Induktor erfassten Teilbereichs mit Schutzgas in den vom Bauteil definierten Kanal einführbar ist, wobei das Bauteil und die zweite Schutzgaseinrichtung relativ zueinander bewegbar sind.

Erfindungsgemäß werden die aus Stahlblech beispielsweise in einer Walzprofilieranlage geformten Sicherheits- oder Strukturbauteile, die ein offenes Querschnittsprofil mit Hinterschnitt oder ein geschlossenes Querschnittsprofil aufweisen, mittels eines Induktors komplett oder in einem oder mehreren Teilabschnitten, in dem bzw. denen eine Härtung gewünscht ist, auf Härtetemperatur erwärmt. Das Bauteil und der Induktor werden hierzu ausgehend von einer Anfangsposition relativ zueinander bewegt, so dass am Ende der Bewegung die gesamte Länge des zu härtenden Abschnitts bzw. Bauteils durch das vom Induktor induzierte elektromagnetische Feld auf eine geeignete Härtetemperatur erwärmt worden ist. Um eine vollständige Austenitbildung im jeweils erwärmten Teilbereich des zu härtenden Abschnitts zu erreichen, wird die Härtetemperatur in der Regel über der A_{c3}-Temperatur des Stahls liegen, aus dem die Sicherheits- oder Strukturbauteile gefertigt sind.

Die induktive Erwärmung erfolgt lokal unter einem Schutzgasmantel, um den Kontakt der erwärmten Bauteiloberfläche mit dem Umgebungssauerstoff und damit die Gefahr einer Verzunderung weitestgehend zu verhindern. Um bei dem geschlossenen oder offenen, einen Hinterschnitt aufweisenden Profil eine Verzunderung der Profilinnenseiten bei der induktiven Erwärmung zu verhindern, wird sowohl außerhalb als auch innerhalb des Profils die Prozessstelle durch spezielle Schutzgaseinrichtungen lokal begleitet.

Mit der erfindungsgemäßen außen- und innenseitigen Beaufschlagung der vom Induktor erfassten Prozessstelle mit Schutzgas wird erreicht, dass die Bauteiloberfläche in dem induktiv gehärteten Bereich nach dem Vergüten ein derartiges Maß an Zunderfreiheit aufweist, dass ohne einen weiteren zwischengeschalteten Behandlungsschritt eine unmittelbar anschließende Phosphatierung und/oder kathodische Tauchlackierung möglich ist. Das Merkmal "zunderfreie Oberfläche" ist in diesem Zusammenhang so zu verstehen, dass die Dicke der sich auf der erwärmten Oberfläche unvermeidbar bildenden Oxidschicht einen bestimmten kritischen Wert nicht überschreitet, ab dem eine unmittelbar anschließende Phosphatierung und/oder kathodische Tauchlackierung nicht mehr problemlos möglich ist. Deshalb erfolgt die Beaufschlagung des induktiv erwärmten Bauteilbereiches mit Schutzgas erfindungsgemäß derart, dass die Oxidschichtdicke am fertig gehärteten Bauteil stets unter einem hinsichtlich der Eignung für das Phosphatieren oder kathodische Tauchlackieren kritischen Grenzwert liegt.

Unmittelbar nach der Erwärmung erfolgt die Abschreckung des induktiv erwärmten Teilbereichs mit einer Abschreckflüssigkeit, vorzugsweise einer Abschreckemulsion. Der erwärmte Teilbereich des Bauteils wird dabei vorzugsweise so schnell abgekühlt, dass eine weitestgehend vollständige Phasenumwandlung des Werkstoffs in dem entsprechend behandelten Teilbereich in die Martensitphase erfolgt. Auf diese Weise können Sicherheits- oder Strukturbauteile aus Stahlblech mit einer Streckgrenze Re von mindestens 1250 MPa, einer Zugfestigkeit Rm von mindestens 1750 MPa und einer Bruchdehnung A₈₀ von mindestens 2% erzielt werden.

Die endgültige Martensithärte lässt sich über die spezielle Zusammensetzung der Abschreckemulsion in gewissen Grenzen gezielt einstellen. Eine vorteilhafte Ausgestaltung des erfindungsgemäßen Verfahrens sieht daher vor, dass die Emulsionszusammensetzung in Abhängigkeit des verwendeten Stahls und der eingestellten Prozessparameter, insbesondere der eingestellten Leistung des Induktors, Frequenz des induzierten elektromagnetischen Feldes, Erwärmungsrate, Härtetemperatur und/oder Abkühlrate eingestellt wird.

Zur Herstellung erfindungsgemäß behandelter Bauteile eignen sich vergütbare Stähle, die ein ausreichendes Härtungspotenzial aufweisen. Besonders zuverlässig erzielen lassen sich die vorstehend angegebenen Härtewerte, wenn das Bauteil aus einem borlegierten Manganstahl hergestellt wird. Ein solcher Stahl kann aus (in Gew.-%) 0,24% < C < 0,45%, 0,15% < Si < 0,40%, 1,10% < Mn < 1,45%, P < 0,025%, S < 0,015%, 0,020% < Al < 0,060%, 0,15% < Cr < 0,60%, 0,020% < Ti < 0,050%, 0,0008% < B < 0,0050%, Rest Eisen und unvermeidbare Verunreinigungen bestehen. Ein derartiger Stahl ist beispielsweise unter dem Kurznamen 27 MnCrB 5-2 bekannt und wird in der StahlEisenListe unter der Werkstoffnummer 1.7182 geführt.

Mit dem erfindungsgemäßen Verfahren lassen sich besonders gut solche Bauteile herstellen, die ein aus einem 1,5 mm bis 4 mm dicken, aus einem borlegierten Manganstahl erzeugten Stahlblech fertig geformt sind, ein geschlossenes Profil oder offenes Profil mit Hinterschnitt besitzen und zumindest partiell, erforderlichenfalls aber über ihre vollständige Länge sowie den gesamten Profilquerschnitt ein martensitisches Gefüge mit den oben genannten Festigkeitseigenschaften aufweisen.

Vorzugsweise wird das Bauteil bei der Durchführung des erfindungsgemäßen Verfahrens lokal über seinen gesamten Profilquerschnitt unter Schutzgas auf Härtetemperatur erwärmt und nach dieser Erwärmung so abgeschreckt, dass ein komplett martensitisches Gefüge über den gesamten Profilquerschnitt eingestellt wird.

Eine nur partielle Härtung von fertig geformten Sicherheits- oder Strukturbauteilen wird beispielsweise durchgeführt, wenn ein Abschnitt des betreffenden Bauteils im Falle eines Aufpralls (Crashs) die kinetische Energie des Aufpralls in Verformungsarbeit umwandeln soll. Ein nicht gehärteter Abschnitt ist hierzu aufgrund seiner höheren Zähigkeit besser geeignet als der gehärtete Abschnitt. Ebenso kann der nicht gehärtete Abschnitt dazu genutzt werden, um das jeweilige Bauteil an andere Karosserie- oder Fahrzeugrahmenteile passgenau anzuschließen.

Aufgrund der genannten chemischen Zusammensetzung des verwendeten Stahlblechs weisen die daraus erfindungsgemäß hergestellten Bauteile auch in ihrem durchgehärteten Bereich noch eine gute Restbruchdehnung bei vollständiger Härtegefügebildung auf. Ebenso sind die Bauteile in ihrem durchgehärteten Bereich bei Einsatz geeigneter Schweißverfahren noch gut schweißbar.

Die Relativbewegung zwischen dem Induktor und dem zu härtenden Bauteil kann dadurch erfolgen, dass sowohl der Induktor als auch das Bauteil durch eine jeweils zugeordnete Fördereinrichtung in entgegengesetzte Richtungen bewegt werden. Eine bevorzugte, die bewegten Massen reduzierende Ausgestaltung der Erfindung sieht jedoch vor, dass das Bauteil ortsfest eingespannt und der Induktor entlang des Bauteils bzw. des zu härtenden Abschnitts des Bauteils bewegt wird. Zu diesem Zweck kann eine erfindungsgemäße Vorrichtung eine ortsfeste Spanneinrichtung zum Einspannen des Bauteils aufweisen und die Fördereinrichtung den Induktor entlang des Bauteils oder zumindest des zu härtenden Abschnitts des Bauteils bewegen. Es liegt jedoch ebenso im Rahmen der Erfindung, den Induktor ortsfest anzuordnen und das Bauteil entlang des Induktors zu führen. Dies kann in der Weise realisiert werden, dass der Induktor ortsfest angeordnet ist und die Fördereinrichtung das Bauteil längs des Induktors bewegt.

Für eine besonders gleichmäßige induktive Erwärmung des Profilquerschnitts des zu härtenden Bauteils ist es günstig, wenn der Induktor als Ringinduktor ausgebildet ist, durch dessen Öffnung das Bauteil geführt wird. Die Form des Ringinduktors und seiner Öffnung ist dabei vorzugsweise an das Profil des Bauteils angepasst, um eine gleichmäßige Einwirkung des vom Induktor erzeugten Feldes auf das Bauteil zu gewährleisten.

Um eine möglichst gleichmäßige, homogene Erwärmung über den Bauteilquerschnitt zu erreichen, kann es zweckmäßig sein, das Bauteil während der induktiven Erwärmung um eine Längsachse zu drehen.

Praktische Versuche haben gezeigt, dass ausreichende Erwärmungsleistungen gewährleistet sind, wenn der Induktor mit einer Leistung von 10 bis 300 kW bei einer 50 bis 200 kHz betragenden Frequenz betrieben wird.

Zum Abschrecken des erwärmten Bereichs des Bauteils können eine oder mehrere Brausen verwendet werden, deren Düsen bevorzugt so angeordnet sind, dass die Kühlmittelstrahlen sowohl die Außenseite als auch die Innenseite des offenen, hinterschnittenen bzw. geschlossenen Profils des Bauteils gleichmäßig gut erreichen. Die Abschreckwirkung kann dabei außer durch die Zusammensetzung des Kühlmittels auch durch den ausgebrachten Volumenstrom des Kühlmittels geregelt werden. So hat sich gezeigt, dass abhängig von der Dicke des Bauteils Ausbringraten von 10 bis 100 Liter/Minute vorgesehen werden sollten, um die rasche Abkühlung in der erforderlichen kurzen Zeit sicherzustellen. Die im Zuge dieser Abkühlung erzielte Abkühlrate sollte mindestens 27 K/s betragen.

Die Außenseite des Bauteils wird mittels einer Schutzgaseinrichtung mit Schutzgas beaufschlagt, die gekoppelt mit dem Induktor relativ zum Bauteil bewegt wird. Das Schutzgas wird zum Schutz des erwärmten Bereichs vor Verzunderung bevorzugt so auf den jeweils erwärmten Teilbereich des Bauteils geleitet, dass das Schutzgas den erwärmten Querschnitt jeweils komplett umströmt. Der äußere lokale Schutzgasmantel wird beispielsweise in der Weise erzeugt, dass eine oder mehrere Ringbrausen vor und hinter dem Induktor angeordnet sind und zusammen mit diesem relativ vom Bauteil bewegt werden.

Als Schutzgas können Stickstoff oder inerte Gase, zum Beispiel Argon eingesetzt werden. Die Verwendung von Stickstoff als Schutzgas kann sich günstig auf das Durchhärtungsergebnis auswirken, indem eine Nitrierung der Oberfläche durch die Stickstoffeinwirkung erzielt wird. Praktische Versuche haben ergeben, dass eine ausreichende Schutzwirkung erzielt wird, wenn 20 bis 60 Liter Schutzgas / Minute ausgebracht werden.

Eine vorteilhafte Ausgestaltung der erfindungsgemäßen Vorrichtung ist dadurch gekennzeichnet, dass die die Innenseite des Bauteils mit Schutzgas beaufschlagende Schutzgaseinrichtung mit federbelasteten Rollen oder federbelasteten Gleitelementen versehen ist, über die sie an der Innenseite des Bauteils abgestützt und mit Abstand zu dieser entlang der Längsachse des Bauteils bewegbar ist. Diese Ausgestaltung bewirkt eine zuverlässige und im Wesentlichen gleichmäßige Beabstandung der Schutzgaseinrichtung gegenüber der Innenseite des Bauteils sowie eine leichte Verfahrbarkeit bzw. Verschiebbarkeit der Schutzgaseinrichtung innerhalb des Bauteils.

Die Schutzgaseinrichtung ist dabei vorzugsweise mit einem flexiblen Druckstab versehen, mittels dem sie in dem vom Bauteil definierten Kanal verschiebbar ist. Der flexible Druckstab, bei dem es sich um einen flexiblen Stahl- oder Kunststoffstab handelt kann, ermöglicht ein flexibles Abfahren von im Bauteil gegebenenfalls vorhandenen Profilkrümmungen. Eine weitere Ausgestaltung der erfindungsgemäßen Vorrichtung sieht vor, das an dem flexiblen Druckstab eine Steuerungs- und/oder Versorgungsleitung für die der Innenseite des Bauteils zugeordneten Schutzgaseinrichtung angebunden ist.

Ein für die praktische Anwendung vorteilhaftes Merkmal der Erfindung ist, dass das Bauteil während des Härtungsprozesses an der Grenze des zu härtenden Abschnitts jeweils mit einer Wärmesenke verkoppelt wird. Diese Wärmesenke hat die Aufgabe, die von dem zu härtenden Abschnitt zu einem nicht zu härtenden Abschnitt des Bauteils vordringende Wärme abzuleiten, so dass ein exakt definierter Übergangsbereich zwischen dem gehärteten und dem jeweils ungehärteten Abschnitt des Bauteils hergestellt wird. Eine solche Wärmesenke kann in der Praxis dadurch hergestellt werden, dass mindestens eine an der Grenze zwischen dem durchzuhärtenden Abschnitt und dem nicht gehärteten Abschnitt des Bauteils positionierbare Spanneinrichtung vorgesehen ist, die während des induktiven Härtens in wärmeleitendem Kontakt mit dem Bauteil steht und in den Grenzbereich gelangende Wärme abführt. Die Wirksamkeit, mit der der ungewollte Wärmefluss zwischen dem zu härtenden und einem im ursprünglichen Zustand zu erhaltenden Abschnitt des Bauteils unterdrückt wird, kann durch eine aktive Kühlung der Spanneinrichtung zusätzlich verbessert werden.

Ein besonders einfacher und gleichzeitig robuster Aufbau einer erfindungsgemäßen Vorrichtung ergibt sich dann, wenn der Induktor, die Brause und die zum Ausbringen des Schutzgases benötigte Düse sowie das gegebenenfalls vorhandene Gehäuse der Schutzgaseinrichtung hinsichtlich der von ihnen ausgeführten Bewegungen miteinander verkoppelt sind.

Der Abstand der Abschreckeinrichtung zum Induktor ist bevorzugt so klein wie möglich, um unkontrollierte Abkühlvorgänge zu vermeiden. Daher sieht eine bevorzugte Ausgestaltung der Erfindung vor, die Abschreckeinrichtung im unmittelbaren Anschluss an den Induktor zu positionieren.

Eine weitere vorteilhafte Ausgestaltung der Erfindung sieht vor, dass das Bauteil unmittelbar nach dem Abschrecken in eine Korrosionsschutzlösung eingetaucht wird. Die Wirkung der Korrosionsschutzlösung kann erforderlichenfalls durch einen unmittelbar nachgeschalteten Trocknungsprozess erhöht werden. Bei besonderen Korrosionsschutzvorschriften kann ein weiterer Tauchgang in einem speziellen Korrosionsschutzöl erfolgen.

Des Weiteren kann eine erfindungsgemäße Vorrichtung mit einer Einrichtung zur Qualitätssicherung ausgestattet sein, die es erlaubt, die einzelnen Prozessschritte online zu überwachen. Dazu gehören eine Frequenzregelanlage für die Induktionsfrequenz, eine Temperaturüberwachung der Erwärmungsstelle beispielsweise über entsprechende Pyrometertechnik und eine Überwachung der Relativbewegungen von Induktor und Bauteil. Ebenso werden die Volumenströme von Schutzgas und Kühlmittel gemessen und aufgezeichnet. Alle Daten können über eine speicherprogrammierbare Steuerung miteinander verknüpft werden und dienen somit der aktiven Qualitätsüberwachung.

Nachfolgend wird die Erfindung anhand einer ein Ausführungsbeispiel darstellenden Zeichnung näher erläutert. Es zeigen jeweils schematisch:
- Fig. 1: ein Unterfahrschutzsystem für ein Nutzfahrzeug mit einem Querrohr in perspektivischer Darstellung;
- Fig. 2: eine Fertigungslinie zur Fertigung eines Sicherheits- oder Strukturbauteils;
- Fig. 3: eine Vorrichtung zum induktiven Härten eines Sicherheits- oder Strukturbauteils für ein Kraftfahrzeug in Draufsicht;
- Fig. 4: die in Fig. 3 dargestellte Vorrichtung in einem Schnitt entlang der in Fig. 1 eingetragenen Schnittlinie A-A; und
- Fig.: 5 ein aus Stahlblech geformtes Sicherheits- oder Strukturbauteil, welches ein offenes, hinterschnittenes Querschnittsprofil aufweist, in perspektivischer Darstellung.

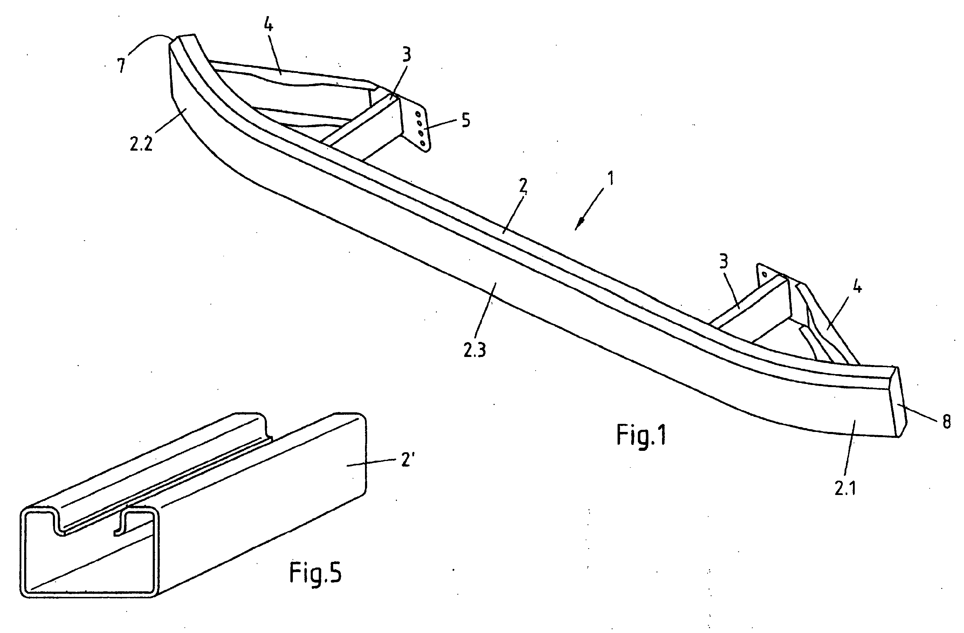

Das in Fig. 1 dargestellte Unterfahrschutzsystem 1 ist für ein Nutzfahrzeug, insbesondere einen Lastkraftwagen bestimmt. Es soll das Unterfahren eines Personenkraftwagens bei einem Frontalzusammenstoss minimieren. Das Unterfahrschutzsystem 1 umfasst einen rohrartigen Aufprallträger 2, zwei im Wesentlichen parallel zueinander verlaufende Längsholme 3, zwei äußere Schrägholme 4 und flanschförmige Stützplatten 5. Es ist zu erkennen, dass die beiden Enden 2.1, 2.2 des Aufprallträgers 2 gegenüber seinem mittleren, im Wesentlichen geradlinigen Abschnitt 2.3 um etwa 10° bis 15° nach hinten gebogen sind. Die Enden des Aufprallträgers 2 können durch daran angeschweißte Blechplatten 7, 8 verschlossen sein. Das Unterfahrschutzsystem 1 wird so an dem jeweiligen Nutzfahrzeug montiert, dass der Aufprallträger 2 etwa im Niveau der Achsen der Vorderräder angeordnet ist. Alternativ können aber auch unterschiedliche Höhenlagen bezogen auf die Achslage fahrzeugspezifisch (beispielsweise Tieflader, Baustellenfahrzeuge, etc.) berücksichtigt werden.

Der Aufprallträger 2 ist so ausgelegt, dass er bei einem Frontalzusammenstoss des Nutzfahrzeuges mit einem Personenkraftwagen die kinetische Energie des Aufpralls in Verformungsarbeit umwandelt. Dabei kommt es zu einer plastischen Deformation des Bauteils 2 (Aufprallträgers).

In dem dargestellten Beispiel weist der aus Stahlblech geformte Aufprallträger 2 ein geschlossenes Profil auf. Der Aufprallträger 2 des Unterfahrschutzsystems kann aber grundsätzlich auch als offenes Profil ausgeführt sein, beispielsweise ein hinterschnittenes C-förmiges Profil 2' gemäß Fig. 5 aufweisen.

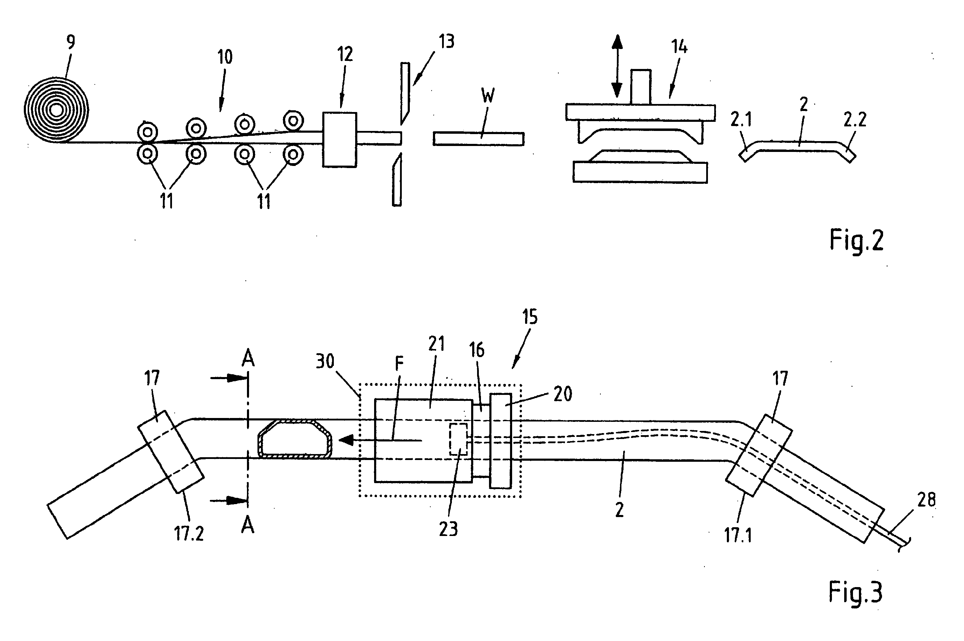

Das Profil des Bauteils (Aufprallträgers) 2 wird durch kontinuierliches Rollformen erzeugt. Denkbar sind aber auch andere aus dem Stand der Technik bekannte Verfahren zum Herstellen des Bauteils 2, beispielsweise ein Zusammenschweißen von zwei kaltumgeformten Halbschalen, oder die Herstellung oder Verwendung eines Blechzuschnittes, der kalt zu einem Aufprallträger umgeformt wird. Fig. 2 zeigt eine Fertigungsfolge, bei welcher bandförmiges Stahlblech von einem Coil 9 einer Walzprofiliereinheit 10 zugeführt wird. Das Stahlblech weist eine Blechstärke auf, die im Bereich von 1,5 mm bis 4,0 mm liegt. In der Walzprofiliereinheit 10 wird das Bandmaterial durch mehrere Rollensätze 11 zu einem Walzprofil W mit im Wesentlichen rohrförmigen Querschnitt umgeformt. Der Walzprofiliereinheit 10 ist eine Schweißeinrichtung 12 nachgeschaltet, mittels der das Walzprofil W kontinuierlich zu einem geschlossenen Profil gefügt wird. Als Fügeprozess ist ein Hochfrequenz- oder Induktions-Schweissprozess vorgesehen, der mit der entsprechenden Prozessgeschwindigkeit des Rollformprozesses arbeitet.

Auf die Schweißeinrichtung 12 folgt eine Ablängeinheit 13, die das Walzprofil W in einzelne Profilbauteile 2 ablängt. Nach dem Ablängen des Walzprofils W wird das jeweilige Profilbauteil 2 in einer Biegeeinrichtung 14 in eine vorgegebene Kontur gebogen. Das Biegen des Profilbauteils 2 wird vorzugsweise als Kaltumformung durchgeführt. In Fig. 2 ist zu erkennen, dass das Bauteil 2 an seinen Enden 2.1, 2.2 in eine bestimmte Kontur gebogen wird.

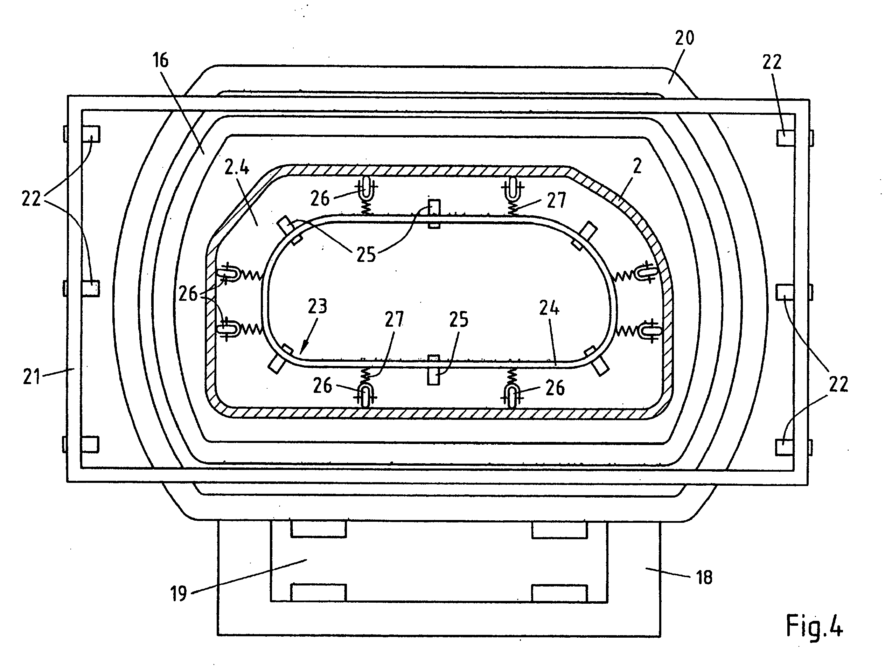

Nach dem Biegeprozess wird das fertig geformte Bauteil 2 induktiv gehärtet. Das Härten des Bauteils 2 erfolgt komplett oder in einem oder mehreren Teilabschnitten des Bauteils 2 mittels einer speziellen Vorrichtung 15. Ein Ausführungsbeispiel dieser Vorrichtung ist in den Figuren 3 und 4 schematisch dargestellt.

Die Vorrichtung 15 umfasst einen Induktor 16 zum Erwärmen eines Teilbereichs des Bauteils 2 auf Härtetemperatur. Diese liegt über der A_{c3}-Temperatur des Stahls, aus dem das Bauteil 2 hergestellt ist. Der Induktor 16 kann in geschlossener (ringförmiger) oder offener Bauweise ausgeführt sein. Er ist vorzugsweise aufklappbar ausgebildet, um seine Positionierung zum Prozessstart zu erleichtern. Der Induktor 16 wird unter Berücksichtigung der Dicke des verwendeten Stahlblechs mit einer Leistung im Bereich zwischen 20 und 300 kW bei einer 80 bis 100 kHz betragenden Frequenz betrieben.

Die Vorrichtung 15 weist ferner mindestens eine Spanneinrichtung 17 zum Einspannen des Bauteils 2 auf. Die Spanneinrichtung 17 umfasst bewegliche Auflager 17.1, 17.2, welche in der Lage sind, die bei der Phasenumwandlung (Erwärmung) des Bauteils 2 auftretende Längenausdehnung des Bauteils 2 aufzunehmen. Die Auflager der Spanneinrichtung 17 besitzen entsprechende Freiheitsgrade.

Der Induktor 16 wird von einer Fördereinrichtung 18 getragen, die den Induktor 16 auf einer sich zwischen den Auflagern der Spanneinrichtung 17 erstreckenden Führungsbahn 19 von einer Startposition an dem einen Auflager 17.1 in Förderrichtung F zu einer Endposition an dem anderen Auflager 17.2 bewegt.

Zusätzlich trägt die Fördereinrichtung 18 eine in Förderrichtung F gesehen hinter dem Induktor 16 angeordnete Brause 20, die Betstandteil einer nicht weiter dargestellten Kühleinrichtung zum Abschrecken des auf Härtetemperatur erwärmten Teilbereichs des Bauteils 2 ist. Die Brause 20 umgreift wie der Induktor 16 den durchzuhärtenden Abschnitt des Bauteils 2 nach Art eines Rings. Auf ihrer dem Bauteil 2 zugeordneten Innenfläche weist die Brause 20 in gleichmäßigen Abständen zueinander angeordnete, hier nicht sichtbare Düsen zum Ausbringen von Abschreckflüssigkeit auf. Die Brause 20 grenzt dabei unmittelbar an die Rückseite des Induktors 16 an, so dass die von der Brause 20 ausgebrachte Abschreckflüssigkeit, vorzugsweise Abschreckemulsion den vom Induktor 16 jeweils erwärmten Teilbereich des Bauteils 2 unmittelbar erreicht, nachdem dieser Teilbereich auf Härtetemperatur erhitzt ist.

In Förderrichtung F vor dem Induktor 16 und unmittelbar angrenzend an seine Vorderseite ist ein ebenfalls von der Fördereinrichtung 18 getragenes Gehäuse 21 angeordnet, welches das Bauteil 2 nach Art einer Hülle umgibt. In dem Gehäuse 21 sind mehrere Düsen 22 zum Ausbringen eines Schutzgases angeordnet. Als Schutzgas wird vorzugsweise Stickstoff eingesetzt. Alternativ kann als Schutzgas auch ein anderes Inertgas, beispielsweise Argon eingesetzt werden.

Die Düsen 22 sind so ausgerichtet, dass das von ihnen ausgebrachte Schutzgas in einer oberflächennahen laminaren Strömung über die Außenseite Bauteils 2 in Richtung des Teilsbereichs strömt, der vom Induktor 16 jeweils auf Härtetemperatur erwärmt wird. Auf diese Weise ist eine Abschottung gebildet, durch die der Zutritt von Umgebungssauerstoff zu dem erhitzten Teilbereich weitestgehend verhindert wird. Der Induktor 16, die Brause 20 und das Gehäuse 21 bilden eine hinsichtlich ihrer Bewegungen verkoppelte Baugruppe 30.

Um auch eine Verzunderung der Innenseiten des Bauteils 2 während dessen induktiver Härtung zu verhindern, wird die jeweilige auf Härtetemperatur erwärmte Stelle auch innerhalb des Bauteils 2 durch eine Schutzgaseinrichtung lokal begleitet, und zwar durch eine zweite Schutzgaseinrichtung 23, die so ausgebildet ist, dass sie in den vom Bauteil 2 definierten Kanal 2.4 eingeführt werden kann. Diese Schutzgaseinrichtung 23 ist dabei mit dem Induktor 16 bzw. der ersten, der Außenseite des Bauteils 2 zugeordneten Schutzgaseinrichtung mechanisch verkoppelt bzw. koppelbar. Sie weist einen Trägerkörper 24 auf, der mit einer Mehrzahl von Düsen 25 zum Ausbringen von Schutzgas versehen ist. In dem dargestellten Ausführungsbeispiel ist der Trägerkörper 24 ringförmig ausgebildet, wobei die Düsen 25 im Wesentlichen gleichmäßig über den Umfang des Trägerkörper 24 verteilt angeordnet sind. Die Düsen 25 sind so ausgerichtet, dass das von ihnen ausgebrachte Schutzgas die Innenseite des vom Induktor 16 jeweils auf Härtetemperatur erhitzten Teilsbereichs des Bauteils 2 beaufschlagt und somit die lokale Verzunderung während des Härtungsprozesses verhindert.

Der Trägerkörper 24 dieser Schutzgaseinrichtung 23 stützt sich über mehrere federbelastete Rollen 26 von innen gegen die durchgehende Profilkontur des Bauteils ab und ermöglicht somit eine im Wesentlichen konzentrische Positionierung der Schutzgaseinrichtung sowie ein leichtes Verschieben innerhalb des Profils. Die den Rollen 26 zugeordneten Federn 27 stützen sich an dem Trägerkörper 24 ab. Die Verschiebung des Trägerkörpers 24 erfolgt über einen flexibel biegbaren Druckstab 28, um gegebenenfalls vorhandene Profilkrümmungen des Bauteils 2 flexibel abfahren zu können. Der Druckstab 28 ist hierzu vorzugsweise aus Stahl und/oder Kunststoff gefertigt. An diesem Druckstab 28 sind auch die Steuerungs- und Versorgungsleitungen (nicht dargestellt) der zweiten Schutzgaseinrichtung 23 angebunden.

Das Einführen der zweiten Schutzgaseinrichtung 23 erfolgt an den offenen Enden des Profilbauteils 2. Die Steuerung der gesamten Vorrichtung 15 erfolgt vorzugsweise über eine zentrale CNC-Steuerung der Induktionsmaschine. Zur Qualitätssicherung werden der der Außenseite des Bauteils 2 zugeführte Schutzgas-Volumenstrom und der der Innenseite des Bauteils 2 zugeführte Schutzgas-Volumenstrom einzeln gemessen. Ziel ist die Erlangung eines hochfesten Profilbauteils 2 insbesondere für Unterfahrschutzsysteme, das ohne weitere Oberflächenbearbeitung direkt nach dem induktiven Härtungsvorgang mittels kathodischer Tauchlackierung lackierfähig ist.

Um die für den genannten Verwendungszweck des Bauteils 2 erforderlichen Festigkeitswerte zu erzielen, werden zu dessen Herstellung spezielle borlegierte Manganstahlbleche verwendet, beispielsweise borlegierte Manganstahlbleche mit der Bezeichnung 27 MnCrB 5-2, 30 MnB 5, 37 MnB 4 oder 42 Mn NiCrB 4-3 verwendet. Diese ermöglichen eine gute Durchhärtung des Bauteils 2 mit optimalen technologischen Eigenschaften. Wie bereits erwähnt, liegt die Blechstärke der verwendeten Manganstahlbleche vorzugsweise im Bereich von 1,5 bis 4 mm.

Die erfindungsgemäß hergestellten Bauteile 2 besitzen eine Streckgrenze Re von mindestens 1250 MPa, eine Zugfestigkeit Rm von mindestens 1750 MPa und eine Bruchdehnung A₈₀ von mindestens 2%.

### Bezugszeichenliste

- 1: Unterfahrschutzsystem
- 2: Bauteil (Aufprallträger)
- 2': offenes Profil
- 2.1: Bauteilende
- 2.2: Bauteilende
- 2.3: mittlerer Abschnitt des Bauteils
- 2.4: Kanal
- 3: Längsholme
- 4: Schrägholme
- 5: Stützplatten
- 6: Querträger
- 7: Blechplatte
- 8: Blechplatte
- 9: Coil (abgewickeltes Blechband)
- 10: Walzprofiliereinheit
- 11: Rollensatz
- 12: Schweißeinrichtung
- 13: Ablängeinheit
- 14: Biegeeinrichtung
- 15: Härtungsvorrichtung
- 16: Induktor
- 17: Spanneinrichtung
- 17.1: Auflager
- 17.2: Auflager
- 18: Fördereinrichtung
- 19: Führungsbahn
- 20: Brause (Kühleinrichtung)
- 21: Gehäuse
- 22: Düsen
- 23: zweite Schutzgaseinrichtung
- 24: Trägerkörper
- 25: Düsen
- 26: Rollen
- 27: Feder
- 28: Druckstab
- 30: Baugruppe
- F: Förderrichtung
- W: Walzprofil

## Patentansprüche

1. Verfahren zur Herstellung von gehärteten Bauteilen (2) aus Stahlblech, die ein geschlossenes Profil oder ein offenes Profil (2') mit Hinterschnitt aufweisen, insbesondere von Aufprallträgern, bei dem zumindest ein Teilbereich des jeweiligen Bauteils (2) unter Schutzgas auf Härtetemperatur erwärmt wird, wobei das Bauteil und ein ein elektromagnetisches Feld induzierender Induktor (16) relativ zueinander bewegt werden, und bei dem der auf Härtetemperatur erwärmte Teilbereich nach dieser Erwärmung abgeschreckt wird,
**dadurch gekennzeichnet, dass**
die Innenseite des Bauteils (2) mittels einer in den vom Profil definierten Kanal (2.4) eingeführten Schutzgaseinrichtung (23) mit Schutzgas beaufschlagt wird, wobei das Bauteil (2) und die in den vom Profil definierten Kanal (2.4) eingeführte Schutzgaseinrichtung (23) relativ zueinander bewegt werden.

2. Verfahren nach Anspruch 1,
**dadurch gekennzeichnet, dass**
das Bauteil (2) aus einem borlegierten Manganstahlblech hergestellt wird, wobei das Manganstahlblech vorzugsweise folgende chemische Zusammensetzung in Gewichtsprozent aufweist:
| | |
|---|---|
| C: | 0,24 - 0,45 % |
| Si: | 0,15 - 0,40 % |
| Mn: | 1,10 - 1,45 % |
| P: | maximal 0,025 % |
| S: | maximal 0,015 % |
| Al: | 0,020 - 0,060 % |
| Cr: | 0,15 - 0,60 % |
| Ti: | 0,020 - 0,050 % |
| B: | 0,0008 - 0,0050 % |
Rest Eisen und unvermeidbare Verunreinigungen.

3. Verfahren nach Anspruch 1 oder 2,
**dadurch gekennzeichnet, dass**
das Profil (2') durch kontinuierliches Rollformen erzeugt wird.

4. Verfahren nach Anspruch 3,
**dadurch gekennzeichnet, dass**
das Profil im Anschluss an das Rollformen kontinuierlich zu einem geschlossenen Profil verschweißt wird.

5. Verfahren nach Anspruch 3 oder 4,
**dadurch gekennzeichnet, dass**
das Profil im Anschluss an das Rollformen oder im Anschluss an ein dem Rollformen folgenden Schweißen abgelängt und das so erhaltene Profil zu dem Bauteil (2) fertig geformt wird, indem das Profil in eine vorgegebene Kontur gebogen wird.

6. Verfahren nach einem der Ansprüche 1 bis 5,
**dadurch gekennzeichnet, dass**
die in den vom Bauteil (2) definierten Kanal (2.4) einführbare Schutzgaseinrichtung (16) mittels eines flexiblen Druckstabes (28) entlang der Längsachse des Bauteils (2) bewegt wird.

7. Verfahren nach einem der Ansprüche 1 bis 6,
**dadurch gekennzeichnet, dass**
die Außenseite des Bauteils (2) mittels einer Schutzgaseinrichtung (21, 22) mit Schutzgas beaufschlagt wird, die gekoppelt mit dem Induktor (16) relativ zum Bauteil (2) bewegt wird, wobei der der Außenseite des Bauteils (2) zugeführte Schutzgas-Volumenstrom und der der Innenseite des Bauteils (2) zugeführte Schutzgas-Volumenstrom einzeln gemessen werden.

8. Verfahren nach einem der Ansprüche 1 bis 7,
**dadurch gekennzeichnet, dass**
der auf Härtetemperatur erwärmte Teilbereich nach dieser Erwärmung mittels einer Emulsion abgeschreckt wird, und dass die Zusammensetzung der zur Abschreckung verwendeten Emulsion in Abhängigkeit des für das Bauteil (2) verwendeten Stahls und/oder in Abhängigkeit eingestellter Parameter des Härtungsprozesses, insbesondere der Härtetemperatur eingestellt wird.

9. Verfahren nach einem der Ansprüche 1 bis 8,
**dadurch gekennzeichnet, dass**
das Bauteil (2) nach Abschluss des Härtungsvorgangs eine Streckgrenze Re von mindestens 1250 MPa, eine Zugfestigkeit Rm von mindestens 1750 MPa und/oder eine Bruchdehnung A₈₀ von mindestens 2 % besitzt.

10. Vorrichtung zur Herstellung von gehärteten Bauteilen aus Stahlblech, die ein geschlossenes Profil oder ein offenes Profil mit Hinterschnitt aufweisen, insbesondere von Aufprallträgern,
mit einem Induktor (16) zum Erwärmen eines Teilbereichs des jeweiligen Bauteils (2) auf Härtetemperatur,
mit einer Kühleinrichtung (20) zum Abschrecken des auf Härtetemperatur erwärmten Teilbereichs,
mit einer der Außenseite des Bauteils (2) zugeordneten Schutzgaseinrichtung (21, 22) zum Ausbringen eines mindestens den vom Induktor erfassten Teilbereich beaufschlagenden Schutzgasstroms und
mit einer Fördereinrichtung (18), die während des Härtens das Bauteil und den Induktor (16) relativ zueinander bewegt,
**gekennzeichnet durch**
eine zweite Schutzgaseinrichtung, die zur Beaufschlagung der Innenseite des vom Induktor (16) erfassten Teilbereichs mit Schutzgas in den vom Bauteil (2) definierten Kanal einführbar ist, wobei das Bauteil (2) und die zweite Schutzgaseinrichtung (23) relativ zueinander bewegbar sind.

11. Vorrichtung nach Anspruch 10,
**dadurch gekennzeichnet, dass**
die zweite Schutzgaseinrichtung (23) mit dem Induktor (16) und/oder der der Außenseite des Bauteils (2) zugeordneten Schutzgaseinrichtung (21, 22) mechanisch verkoppelt ist.

12. Vorrichtung nach Anspruch 10 oder 11,
**dadurch gekennzeichnet, dass**
die zweite Schutzgaseinrichtung (23) mit federbelasteten Rollen (26) oder federbelasteten Gleitelementen versehen ist, über die sie an der Innenseite des Bauteils (2) abgestützt und mit Abstand zu dieser entlang der Längsachse des Bauteils (2) bewegbar ist.

13. Vorrichtung nach einem der Ansprüche 10 bis 12,
**dadurch gekennzeichnet, dass**
die zweite Schutzgaseinrichtung (23) mit einem flexiblen Druckstab (28) versehen ist, mittels dem sie in dem vom Bauteil (2) definierten Kanal (2.4) verschiebbar ist.

14. Vorrichtung nach Anspruch 13,
**dadurch gekennzeichnet, dass**
an dem flexiblen Druckstab (28) eine Steuerungs- und/oder Versorgungsleitung für die zweite Schutzgaseinrichtung (23) angebunden ist.

15. Vorrichtung nach einem der Ansprüche 10 bis 14,
**dadurch gekennzeichnet, dass**
die zweite Schutzgaseinrichtung (23) einen ringförmigen Trägerkörper (24) aufweist, der über seinen Umfang mit einer Mehrzahl von Düsen (25) zum Ausbringen von Schutzgas versehen ist.

16. Vorrichtung nach einem der Ansprüche 10 bis 15,
**dadurch gekennzeichnet, dass**
der Induktor (16) offen oder in Form eines geschlossenen Rings ausgebildet ist.

17. Vorrichtung nach einem der Ansprüche 10 bis 16,
**dadurch gekennzeichnet, dass**
der Induktor (16) aufklappbar ausgebildet ist.

18. Vorrichtung nach einem der Ansprüche 10 bis 17,
**dadurch gekennzeichnet, dass**
eine Spanneinrichtung (17, 17.1, 17.2) zum Einspannen des Bauteils (2) vorgesehen ist, wobei die Spanneinrichtung (17) bewegliche Auflager (17.1, 17.2) umfasst.

## Claims

1. Method for the production of hardened components (2) made of sheet steel, which have a closed profile or an open profile (2') comprising an undercut, in particular of impact beams, in which method at least one portion of the respective component (2) is heated to hardening temperature under protecting gas, the component and an inductor (16) that induces an electromagnetic field being moved relative to one another, and in which the portion that has been heated to hardening temperature is quenched after this heating operation, **characterised in that** the interior of the component (2) is supplied with protecting gas by an protecting gas apparatus (23) introduced into the duct (2.4) defined by the profile, the component (2) and the protecting gas apparatus (23) introduced into the duct (2.4) defined by the profile being moved relative to one another.

2. Method according to claim 1,
**characterised in that** the component (2) is produced from a boron-alloyed manganese steel sheet, the manganese steel sheet preferably having the following chemical composition in percent by weight:
| | |
|---|---|
| C: | 0.24 - 0.45 % |
| Si: | 0.15 - 0.40 % |
| Mn: | 1.10 - 1.45 % |
| P: | maximum 0.025% |
| S: | maximum 0.015 % |
| Al: | 0.020 - 0.060 % |
| Cr: | 0.15 - 0.60 % |
| Ti: | 0.020 - 0.050 % |
| B: | 0.0008 - 0.0050 % |
remainder iron and unavoidable impurities.

3. Method according to either claim 1 or claim 2,
**characterised in that** the profile (2') is produced by continuous roll-forming.

4. Method according to claim 3,
**characterised in that** subsequent to the roll-forming operation, the profile is continuously welded to form a closed profile.

5. Method according to either claim 3 or claim 4,
**characterised in that** subsequent to the roll-forming operation or subsequent to a welding operation that follows the roll-forming operation, the profile is cut into lengths and the profile thus obtained is finally shaped into the component (2) **in that** the profile is bent into a given contour.

6. Method according to any one of claims 1 to 5,
**characterised in that** the protecting gas apparatus (16), which can be introduced into the duct (2.4) defined by the component (2), is moved along the longitudinal axis of the component (2) by means of a flexible pressure rod (28).

7. Method according to any one of claims 1 to 6,
**characterised in that** the exterior of the component (2) is supplied with protecting gas by an protecting gas apparatus (21, 22) which is moved relative to the component (2) together with the inductor (16), the volumetric flow rate of protecting gas supplied to the exterior of the component (2) and the volumetric flow rate of protecting gas supplied to the interior of the component (2) being measured separately.

8. Method according to any one of claims 1 to 7,
**characterised in that** the portion that has been heated to hardening temperature is quenched by means of an emulsion after this heating operation, and **in that** the composition of the emulsion used for quenching is adjusted as a function of the steel used for the component (2) and/or as a function of the set parameters of the hardening process, in particular the hardening temperature.

9. Method according to any one of claims 1 to 8,
**characterised in that** on completion of the hardening process, the component (2) has a yield strength Re of at least 1250 MPa, a tensile strength Rm of at least 1750 MPa and/or an elongation at break A₈₀ of at least 2 %.

10. Device for the production of hardened components made of sheet steel, which have a closed profile or an open profile comprising an undercut, in particular of impact beams, comprising an inductor (16) for heating a portion of the respective component (2) to hardening temperature, comprising a cooling means (20) for quenching the portion that has been heated to hardening temperature,
comprising an protecting gas apparatus (21, 22) associated with the exterior of the component (2) for providing of an protecting gas flow which supplies at least the portion affected by the inductor, and
comprising a conveyance means (18) which moves the component and the inductor (16) relative to one another during the hardening operation,
**characterised by** a second protecting gas apparatus, which can be introduced into the duct defined by the component (2) to supply the interior of the portion affected by the inductor (16) with protecting gas, the component (2) and the second protecting gas apparatus (23) being movable relative to one another.

11. Device according to claim 10,
**characterised in that** the second protecting gas apparatus (23) is coupled mechanically to the inductor (16) and/or to the protecting gas apparatus (21, 22) associated with the exterior of the component (2).

12. Device according to either claim 10 or claim 11,
**characterised in that** the second protecting gas apparatus (23) is provided with spring-loaded rollers (26) or spring-loaded slide elements, via which said apparatus is supported on the interior of the component (2) and can be moved along the longitudinal axis of the component (2) at a distance from said face.

13. Device according to any one of claims 10 to 12,
**characterised in that** the second protecting gas apparatus (23) is provided with a flexible pressure rod (28), via which said apparatus is displaceable in the duct (2.4) defined by the component (2).

14. Device according to claim 13,
**characterised in that** a control and/or supply line for the second protecting gas apparatus (23) is connected to the flexible pressure rod (28).

15. Device according to any one of claims 10 to 14,
**characterised in that** the second protecting gas apparatus (23) has an annular carrier (24) which is provided about its circumference with a plurality of jets for yielding protecting gas.

16. Device according to any one of claims 10 to 15,
**characterised in that** the inductor (16) is open or in the shape of a closed ring.

17. Device according to any one of claims 10 to 16,
**characterised in that** the inductor (16) is hingedly openable.

18. Device according to any one of claims 10 to 17,
**characterised in that** a clamping means (17, 17.1, 17.2) is provided for clamping the component (2), the clamping means (17) comprising movable supports (17.1, 17.2).

## Revendications

1. Procédé de fabrication de composants durcis (2) formés dans une tôle d'acier, composants qui présentent un profilé fermé ou un profilé ouvert (2') comportant une contre-dépouille, en particulier de supports absorbant les chocs, procédé dans lequel au moins une zone partielle du composant respectif (2) est chauffée, sous gaz protecteur, à une température de durcissement, où le composant et un inducteur (16) induisant un champ électromagnétique sont déplacés l'un par rapport à l'autre, et procédé dans lequel la zone partielle chauffée à une température de durcissement est trempée après ce chauffage, **caractérisé en ce que** le côté intérieur du composant (2) est alimenté en gaz protecteur au moyen d'un dispositif de gaz protecteur (23) introduit dans le canal (2.4) défini par le profilé, où le composant (2) et le dispositif de gaz protecteur (23) introduit dans le canal (2.4) défini par le profilé sont déplacés l'un par rapport à l'autre.

2. Procédé selon la revendication 1, **caractérisé en ce que** le composant (2) est fabriqué à partir d'une tôle d'acier au manganèse allié avec du bore, où la tôle d'acier au manganèse présente de préférence la composition chimique suivante exprimée en pourcentage en poids :
| | |
|---|---|
| C : | 0,24 % - 0,45 % |
| Si : | 0,15% - 0,40 % |
| Mn : | 1,10% - 1,45 % |
| P : | 0,025% au maximum |
| S : | 0,015% au maximum |
| Al : | 0,020 % - 0,060 % |
| Cr : | 0,15 % - 0,60% |
| Ti : | 0,020 % - 0,050 % |
| B : | 0,0008% - 0,0050 %, |
la partie résiduelle se composant de fer et d'impuretés inévitables.

3. Procédé selon la revendication 1 ou 2, **caractérisé en ce que** le profilé (2') est produit par roulage effectué en continu.

4. Procédé selon la revendication 3, **caractérisé en ce que** le profilé, suite au roulage, est soudé en continu pour former un profilé fermé.

5. Procédé selon la revendication 3 ou 4, **caractérisé en ce que** le profilé est tronçonné suite au roulage ou suite à un soudage succédant au roulage, et le profilé ainsi obtenu est façonné pour donner au composant (2) sa forme définitive, tandis que le profilé est incurvé suivant un contour prédéfini.

6. Procédé selon l'une quelconque des revendications 1 à 5, **caractérisé en ce que** le dispositif de gaz protecteur (23) pouvant être introduit dans le canal (2.4) défini par le composant (2) est déplacé le long de l'axe longitudinal du composant (2), au moyen d'une barre de compression flexible (28).

7. Procédé selon l'une quelconque des revendications 1 à 6, **caractérisé en ce que** le côté extérieur du composant (2) est alimenté en gaz protecteur au moyen d'un dispositif de gaz protecteur (21, 22) qui, couplé à l'inducteur (16), est déplacé par rapport au composant (2), où le débit volumétrique de gaz protecteur fourni au côté extérieur du composant (2) et le débit volumétrique de gaz protecteur fourni au côté intérieur du composant (2) sont mesurés séparément.

8. Procédé selon l'une quelconque des revendications 1 à 7, **caractérisé en ce que** la zone partielle chauffée à une température de durcissement est, après ce chauffage, trempée au moyen d'une émulsion, et **en ce que** la composition de l'émulsion utilisée pour la trempe est réglée en fonction de l'acier utilisé pour le composant (2) et/ou en fonction de paramètres réglés concernant le processus de durcissement, en particulier en fonction de la température de durcissement.

9. Procédé selon l'une quelconque des revendications 1 à 8, **caractérisé en ce que** le composant (2), une fois que le processus de durcissement est terminé, possède une limite apparente d'élasticité Re d'au moins 1250 MPa, une résistance à la traction Rm d'au moins 1750 MPa et/ou un allongement à la rupture A₈₀ d'au moins 2 %.

10. Dispositif de fabrication de composants durcis formés dans une tôle d'acier, composants qui présentent un profilé fermé ou un profilé ouvert comportant une contre-dépouille, en particulier de supports absorbant les chocs,
comportant un inducteur (16) servant à chauffer une zone partielle du composant respectif (2), à une température de durcissement,
comportant un dispositif de refroidissement (20) utilisé pour la trempe de la zone partielle chauffée à la température de durcissement,
comportant un dispositif de gaz protecteur (21, 22) associé au côté extérieur du composant (2) et servant à produire un flux de gaz protecteur alimentant au moins la zone partielle détectée par l'inducteur, et comportant un dispositif de transport (18) qui, au cours du durcissement, déplace le composant et l'inducteur (16), l'un par rapport à l'autre, **caractérisé en ce qu'**un deuxième dispositif de gaz protecteur qui, pour l'alimentation en gaz protecteur prévue pour le côté intérieur de la zone partielle sur laquelle l'inducteur (16) agit, peut être introduit dans le canal défini par le composant (2), où le composant (2) et le deuxième dispositif de gaz protecteur (23) sont mobiles l'un par rapport à l'autre.

11. Dispositif selon la revendication 10, **caractérisé en ce que** le deuxième dispositif de gaz protecteur (23) est couplé mécaniquement à l'inducteur (16) et/ou au dispositif de gaz protecteur (21, 22) associé au côté extérieur du composant (2).

12. Dispositif selon la revendication 10 ou 11, **caractérisé en ce que** le deuxième dispositif de gaz protecteur (23) est doté de rouleaux (26) à ressort ou d'éléments coulissants à ressort par lesquels ce deuxième dispositif de gaz protecteur est supporté sur le côté intérieur du composant (2) et est mobile à distance de ce côté intérieur, le long de l'axe longitudinal du composant (2).

13. Dispositif selon l'une quelconque des revendications 10 à 12, **caractérisé en ce que** le deuxième dispositif de gaz protecteur (23) est doté d'une barre de compression flexible (28) au moyen de laquelle ce deuxième dispositif de gaz protecteur peut coulisser dans le canal (2.4) défini par le composant (2).

14. Dispositif selon la revendication 13, **caractérisé en ce qu'**une conduite de commande et/ou d'alimentation prévue pour le deuxième dispositif de gaz protecteur (23) est fixée sur la barre de compression flexible (28).

15. Dispositif selon l'une quelconque des revendications 10 à 14, **caractérisé en ce que** le deuxième dispositif de gaz protecteur (23) présente un corps support (24) de forme annulaire qui, sur sa circonférence, est doté d'une pluralité de buses (25) fournissant le gaz protecteur.

16. Dispositif selon l'une quelconque des revendications 10 à 15, **caractérisé en ce que** l'inducteur (16) est configuré en étant ouvert ou bien sous la forme d'un anneau fermé.

17. Dispositif selon l'une quelconque des revendications 10 à 16, **caractérisé en ce que** l'inducteur (16) est configuré en étant rabattable.

18. Dispositif selon l'une quelconque des revendications 10 à 17, **caractérisé en ce qu'**un dispositif de serrage (17, 17.1, 17.2) est prévu pour encastrer le composant (2), le dispositif de serrage (17) comprenant des appuis mobiles (17.1, 17.2).
